Europäisches Patentamt

European Patent Office

Office européen des brevets

(19)

(11) Numéro de publication: **0 260 180**
**A1**

(12) **DEMANDE DE BREVET EUROPEEN**

(21) Numéro de dépôt: **87401932.6**

(22) Date de dépôt: **26.08.87**

(51) Int. Cl.⁴: **B 23 Q 1/02**
**B 23 Q 1/26**

(30) Priorité: **28.08.86 FR 8612163**

(43) Date de publication de la demande:
**16.03.88 Bulletin 88/11**

(84) Etats contractants désignés:
**AT BE CH DE FR GB IT LI LU NL SE**

(71) Demandeur: **CENTAURE ROBOTIQUE Sarl**
**42-44 Rue des Meuniers**
**F-93100 Montreuil (FR)**

(72) Inventeur: **Billiote, Jean-Marie**
**8 place des Fédérés**
**F-93160 Noisy Le Grand (FR)**

**Primat, Didier**
**15 chemin de Bois Caran Collonge**
**Bellerive CH-1245 Geneve (CH)**

**Bouin, Thierry**
**Résidence Le Nerprun**
**F-28500 Boutigny (FR)**

**Basset, Frédéric**
**33 rue Frémicourt**
**F-75015 Paris (FR)**

**Beauvois, Jacques**
**3 piace des Vosges**
**F-75004 Paris (FR)**

(74) Mandataire: **Pinguet, André**
**CAPRI 28 bis, avenue Mozart**
**F-75016 Paris (FR)**

(54) **Procédé de fabrication d'un bâti de support et de guidage pour un dispositif de positionnement d'un appareil dans un plan et bâti résultant.**

(57) Un bâti de support et de guidage comporte un banc (1) comprenant un plateau (4) définissant une surface plane S3 et deux rails (5) rapportés définissant deux surfaces S1, S1′ de guidage parallèles l'une à l'autre et perpendiculaires à là surface S3 ainsi qu'une poutre (2) définissant deux surfaces S2, S2′ de guidage parallèles, perpendiculaires aux surfaces de guidage S1, S1′, ledit banc et ladite poutre étant maintenus écartés par deux entretoises (3). Toutes les pièces de ce bâti sont réalisés en granit usiné et poli. Elles sont assujetties les unes aux autres au moyen de tiges filetées (8, 11) et d'écrous et sont verrouillées les unes aux autres au moyen d'inserts (12) cylindriques d'axe perpendiculaire à celui desdites tiges filetées; Avantageusement, ces inserts sont métalliques.

Le bâti ainsi constitué a une géométrie très stable dans le temps et n'exige pas de réglage postérieurement à son assemblage.

## Description

### PROCEDE DE FABRICATION D'UN BATI DE SUPPORT ET DE GUIDAGE POUR UN DISPOSITIF DE POSITIONNEMENT D'UN APPAREIL DANS UN PLAN ET BATI RESULTANT

La présente invention a pour objet un procédé de fabrication d'un bâti de support et de guidage pour un dispositif de positionnement d'un appareil dans un plan ainsi que le bâti résultant de l'application de ce procédé.

Le positionnement d'un appareil, tel qu'un outil ou un système optique par exemple, par rapport à un plan défini par deux axes perpendiculaires X-X', Y-Y', peut être réalisé de trois façons différentes selon que l'appareil est fixe, ou mobile parallèlement à l'un des axes X-X', Y-Y', ou mobile parallèlement à l'axe X-X' et à l'axe Y-Y'. Dans le premier cas, l'objet sur lequel on veut intervenir au moyen de l'appareil est assujetti à un chariot secondaire mobile sur une platine également mobile, la direction de déplacement dudit chariot étant perpendiculaire à la direction de déplacement de ladite platine; dans le second cas, il est assujetti à une platine mobile sur un axe perpendiculaire à la direction de déplacement de l'appareil ; dans le troisième cas, l'objet sur lequel on veut intervenir au moyen de l'appareil est assujetti à un support fixe.

La seconde de ces solutions, dans le cadre de laquelle se place l'invention et qui est largement retenue pour la réalisation de machines aussi diverses que fraiseuses, rectifieuses, perceuses et détoureuses de circuits imprimés, traceurs à plat pour circuits imprimés, etc., présente l'intérêt que les véhicules respectifs de l'appareil et de l'objet élaboré par ledit appareil, dénommés ci-dessus respectivement chariot et platine, se déplacent sur des supports indépendants l'un de l'autre. Avec des machines de ce type, la précision obtenue dans le positionnement de l'appareil relativement à l'objet qu'il élabore est donc essentiellement liée à l'ajustage et à la stabilité du bâti qui les supporte. De façon usuelle, un tel bâti comporte un banc pour le support et le guidage d'une platine selon un axe X-X' et une poutre pour le support et le guidage d'un chariot selon un axe Y-Y'. Ce banc définit deux surfaces de guidage parfaitement parallèles l'une à l'autre S1, S1' et une troisième surface S3 parfaitement perpendiculaire aux deux précédentes et cette poutre définit deux surfaces de guidage parfaitement parallèles l'une à l'autre S2, S2' et parfaitement perpendiculaires à la fois aux surfaces S1, S1' et à la surface S3 dudit banc. C'est naturellement la mise au point de ces parallélismes et de ces perpendicularités (obtenue selon les paires de surfaces considérées, soit par usinage soit par positionnement relatifs), qui constitue le point le plus délicat de la réalisation d'un bâti de ce type. Pour s'affranchir de contraintes mécaniques susceptibles de fausser la géométrie de ces bâtis, liées à la nature des matériaux utilisés on fabrique usuellement les bancs et les poutres dans des matériaux minéraux tels que le granit, dont le coefficient de dilatation est faible par rapport à celui des métaux, et qui sont très stables dans le temps.

Dans les bâtis réalisés jusqu'à présent, les bancs et les poutres sont usuellement assujettis les uns aux autres et positionnés les uns par rapport aux autres au moyen de dispositifs mécaniques comportant des organes de réglage de précision. D'autre part, les surfaces de guidage S1 et S1' du banc sont généralement définies par une ou plusieurs rainures pratiquées dans un parallélipipède de granit. Ces réalisations de l'art antérieur présentent un certain nombre d'inconvénients. En ce qui concerne les dispositifs mécaniques d'assujettissement et de positionnement du banc et de la poutre des bâtis, ils sont coûteux. Les bâtis, assemblés au moyen de tels dispositifs, ne sont pas ajustés une fois pour toutes, et leurs caractéristiques géométriques (parallélisme et perpendicularité des surfaces de guidage) doivent être vérifiées et, le cas échéant, rectifiées à intervalles réguliers, notamment après tout déplacement. Ces interventions, qui sont longues et minutieuses, augmentent le coût d'exploitation des machines. En ce qui concerne les bancs où les surfaces de guidage S1, S1' sont définies par les côtés latéraux d'une ou de plusieurs rainures, ils présentent l'inconvénient d'être lourds, puisqu'ils doivent être suffisamment épais pour qu'on y puisse pratiquer lesdites rainures. En outre, les techniques actuelles d'usinage en creux du granit n'offrent pas une précision suffisante pour la réalisation de surfaces de guidage parallèles à quelques microns près (pour des bâtis ayant de l'ordre de un à deux mètres dans chaque dimension) exigibles sur certains types de machines.

C'est à pallier ces inconvénients que s'attache la présente invention dont l'objet est un procédé de fabrication d'un banc et d'un bâti qui soient ajustés une fois pour toutes lors de leur assemblage, qui restent stables dans le temps et qui soient moins lourds et moins coûteux que les réalisations de l'art antérieur.

Selon l'invention, un procédé de fabrication d'un banc de support et de guidage pour un dispositif de positionnement d'un appareil parallèlement à un axe rectiligne X-X' comporte les étapes de :
- usiner dans un matériau minéral:
• un plateau définissant une surface de référence plane (S3),
• au moins un rail de guidage pour définir deux surfaces de référence planes, parallèles (S1, S1') ;
- percer
• das le(s) rail(s) de guidage au moins deux trous parallèles aux surfaces (S1, S1') et,
• dans le plateau, des trous perpendiculaires à la surface plane (S3) correspondant aux trous percés dans le(s) rail(s) en vue de l'assujettissement dudit (desdits) rail(s) audit plateau ;
- positionner le(s) rail(s) de guidage relativement au plateau de façon que:
• les surfaces (S1, S1') soient parallèles l'une à l'autre et soient parallèles à l'axe (X-X'),
• les surfaces (S1, S1') soient perpendiculaires à la surface (S3) ;

- assujettir le(s) rail(s) de guidage au plateau au moyen de tiges filetées et d'écrous, lesdites tiges filetées passant dans les trous ;
- verrouiller le banc au moyen d'inserts
• logés dans la masse du matériau minéral constituant le plateau et le(s) rail(s) de guidage,
• mitoyens audit plateau et audit (auxdits) rail(s), et
• d'axe sensiblement perpendiculaire à celui des trous.

Selon l'invention, un procédé de fabrication d'un bâti de support et de guidage pour un dispositif de positionnement d'un appareil dans un plan défini par des axes perpendiculaires (X-X', Y-Y'), ledit bâti comportant:
• un banc pour le support et le guidage d'une platine parallèlement à l'axe (X-X'), et
• une poutre pour le support et le guidage d'un chariot parallèlement à l'axe (Y-Y'),
comporte les étapes de:
- fabriquer dans un matériau minéral
• un banc définissant deux surfaces de référence planes (S1, S1') parallèles, ainsi qu'une surface plane de référence (S3) perpendiculaire aux surfaces (S1, S1') ;
- usiner
• une poutre définissant deux surfaces de référence planes (S2, S2') parallèles, et
• deux entretoises ayant des longueurs identiques ;
- percer
• à chacune des extrémités de la poutre, parallèlement aux surfaces de référence (S2, S2'), au moins deux trous,
• dans les entretoises, parallèlement à leur longueur, au moins deux trous , et
• dans le banc, perpendiculairement à la surface de référence (S3), au moins deux trous, les trous percés dans les entretoises et dans le banc correspondant aux trous percés dans la poutre en vue de l'assujettissement de ladite poutre audit banc avec intercalation desdites entretoises ;
- positionner la poutre relativement au banc avec intercalation des entretoises pour maintenir ladite poutre à distance dudit banc de façon que :
• les surfaces de référence (S2, S2') de la poutre soient perpendiculaires aux surfaces de référence (S1, S1') du banc,
• les surfaces de référence (S2, S2') de la poutre soient perpendiculaires à la surface de référence (S3) du banc ;
- assujettir la poutre au banc avec intercalation des entretoises, au moyen de tiges filetées et d'écrous, lesdites tiges filetées passant dans les trous ;
- verrouiller le bâti au moyen d'inserts
• logés dans la masse du matériau minéral constituant le banc, la poutre et les entretoises,
• mitoyens audit banc, à ladite poutre et auxdites entretoises, pris deux à deux,
• d'axe sensiblement perpendiculaire à celui des trous.

D'autres caractéristiques et avantages de présente invention apparaîtront mieux à la lecture de la description qui va suivre, faite en relation avec les dessins annexés, sur lesquels :

la figure 1 est une vue en perspective simplifiée d'un premier mode de réalisation du bâti selon l'invention ; et,

la figure 2 est une vue en perspective simplifiée d'un second mode de réalisation du bâti selon l'invention.

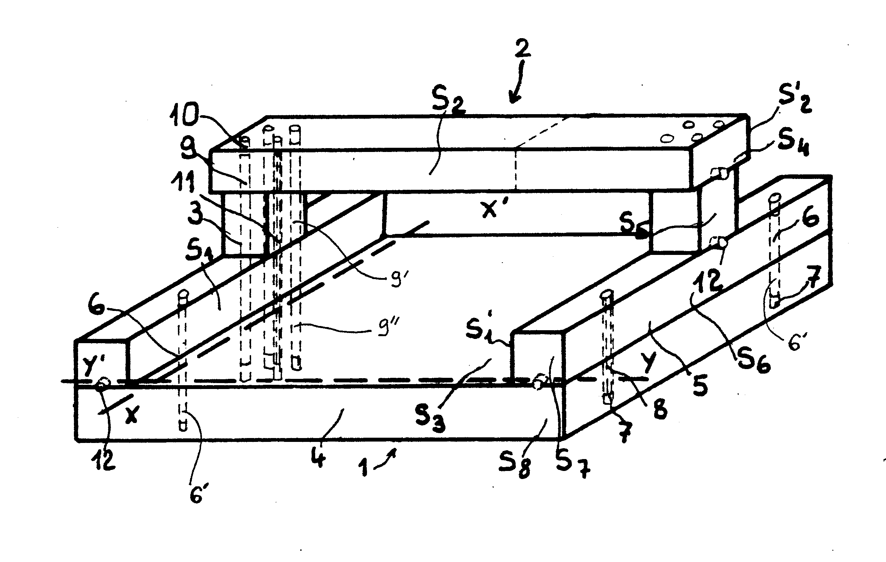

La figure 1 représente une premier mode de réalisation d'un bâti de support et de guidage selon l'invention. Ce bâti comporte un banc 1 destiné au support et au guidage unidirectionnel d'une platine mobile (non représentée) et une poutre 2 destinée au support et au guidage unidirectionnel d'un chariot mobile (non représenté), ladite poutre étant maintenue écartée dudit banc par deux entretoises 3. Le banc 1 comporte un plateau 4 ayant la forme d'un parallélipipède rectangle aplati dont la surface S3 située en vis-à-vis de la poutre 2 est parfaitement plane ainsi que deux rails de guidage 5 rapportés ayant la forme d'un parallélépipède rectangle allongé et définissant deux surfaces de guidage latérales S1, S1' situées en vis-à-vis, perpendiculaires à la surface S3 et parallèles à un même axe X-X'. La poutre 2 a la forme d'un parallélipipède rectangle allongé d'axe parallèle à un axe Y-Y' et définit deux surfaces de guidage S2, S2' perpendiculaires à la fois à la surface S3 et aux surfaces S1, S1'. Pour des raisons qui apparaîtront clairement plus loin lorsqu'il sera question du verrouillage des différentes pièces de ce bâti, les surfaces extérieures de ces pièces, soit par exemple les surfaces S4, S5, S6 ou les surfaces S7, S8 sont avantageusement coplanaires.

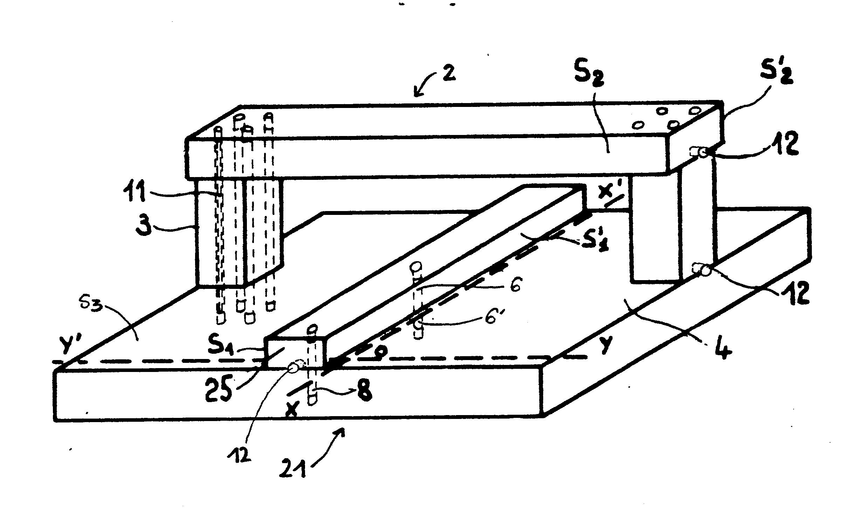

Toutes les pièces du bâti décrit ci-dessus sont réalisées dans du granit (ou dans tout autre matériau minéral possédant des caractéristiques analogues à celles du granit). Avantageusement, les pièces symétriques, telles que les deux entretoises 3 et les deux rails 5, sont usinées ensemble de façon que, en particulier, leurs dimensions verticales soient rigoureusement identiques. Une fois rectifiées et polies sur toutes leurs surfaces, ces pièces sont percées en vue de leur assujettissement : on fore ainsi des trous 6 dans les rails 5, contenus dans un plan vertical médian, ainsi que des trous 6' correspondants dans le plateau 4 (ces trous sont au nombre de trois sur la figure 1, ce nombre étant arbitraire). Les extrémités des trous 6, 6' débouchant sur l'extérieur sont munis de lamages 7. De même, on fore des trous 9 verticaux dans chacune des extrémités de la poutre 2 (au nombre de quatre sur les figures 1 et 2, ce nombre étant arbitraire), ainsi que des trous correspondants dans les entretoises 3 (trous 9'), dans le banc 1 (trous 9"). L'extrémité des trous 9, 9" débouchant sur l'extérieur sont munis de lamages 10. Le perçage de ces pièces effectué, on aligne respectivement chacun des rails de guidage 5 sur les bords du plateau 4 et on passe une tige filetée 8 dans chacun des trous 6, 6" sur les extrémités de laquelle on serre un écrou, sans toutefois aller jusqu'au blocage. On positionne alors les deux rails 5 l'un par rapport à l'autre de façon que leurs surfaces situées en vis-à-vis, S1, S1', soient parfaitement parallèles et l'on achève de serrer les écrous auxquels les lamages 7 servent de logement. Une fois les rails 5 et le plateau 4 assemblés, on place sur le banc 1 ainsi constitué les entretoises 3 que l'on fait surmonter par la poutre 2.

Comme il a été décrit plus haut à propos du banc 1, on assujettit ensuite le tout en deux temps au moyen de tiges filetées 11 et d'écrous, la phase de blocage finale étant précédée d'une phase de positionnement très précise de la poutre 2 par rapport au plateau 4 à l'issue duquel les surfaces S2, S2' sont parfaitement perpendiculaires aux surfaces S1, S1' et à la surface S3. Grâce aux matériaux employés, à la façon dont ils sont usinés et polis (connue en soi), ainsi qu'au procédé d'assemblage utilisé, on arrive à obtenir une précision de l'ordre du micron dans le parallélisme des surfaces S1 et S1', des surfaces S2 et S2', et dans la perpendicularité des surfaces S1, (S1') et S2 (S2') pour un bâti ayant de l'ordre de un à deux mètres dans chaque dimension. Une fois les différentes pièces du bâti positionnées et assujetties définitivement les unes aux autres, on procède à leur verrouillage de façon à assurer la stabilité de la géométrie du bâti dans le temps, à la rendre indépendante des dilatations, des vibrations, et en général de toutes les contraintes mécaniques engendrées par l'environnement. Pour réaliser ce verrouillage, on dispose au moins un insert 12, d'axe perpendiculaire à l'axe des trous 6, 6' et 9, 9', 9" entre les pièces contiguës du bâti prises deux à deux. Pour ce faire, on perce, approximativement au milieu de presque toutes les lignes de séparation des surfaces extérieures contiguës, -que l'on a avantageusement prévues coplanaires-, de deux pièces adjacentes, soit par exemple les surfaces S4 et S5, S5 et S6, S7 et S8, un trou de section circulaire de quelques centimètres de profondeur et perpendiculaires auxdites surfaces, dans lequel on introduit ensuite un insert 12 de forme cylindrique, ayant un diamètre égal à celui des trous au jeu d'entrée près. Ces inserts 12 sont assujettis aux pièces contiguës par collage. De par leur disposition, ils jouent un rôle complémentaire de celui des organes d'assujettissement (tiges filetées et écrous) des diverses pièces les unes aux autres, lesquels organes interdisent tout déplacement desdites pièces les unes par rapport aux autres dans la direction de leur axe, ainsi que, dans une très large mesure, tout déplacement dans un plan perpendiculaire audit axe. Grâce aux inserts 12, aucune translation d'une pièce par rapport à une pièce directement contiguë, si minime soit-elle, n'est plus possible dans un plan perpendiculaire à l'axe desdits organes d'assujettissement. Outre leur efficacité comme moyen de verrouillage les inserts 12 présentent l'intérêt de rendre totalement inutile le collage des différentes pièces du bâti les unes aux autres, lequel est de pratique courante dans ce type d'assemblage. De ce fait, si l'une des pièces du bâti vient à être endommagée, il est aisé de la remplacer puisqu'il n'est, pour la désolidariser de l'ensemble, que de faire sauter les inserts 12 concernés.

Les tiges filetées servant à assembler les diverses pièces du bâti sont en acier inoxydable, les coefficients de dilatation de l'acier et du granit étant tels que, dans les conditions d'utilisation des appareils supportés usuellement par le bâti selon l'invention, l'élasticité de l'acier suffit à compenser les effets résultant de leur différence. Les inserts 12 de verrouillage sont réalisés dans tout type de matériau présentant des qualités mécaniques appropriées, avantageusement en bronze pour le cas où l'on serait dans l'obligation d'en extraire quelques uns de leur logement (le bronze présentant en effet sur l'acier inoxydable, par exemple, -lequel, par ailleurs, conviendrait à cet emploi-, l'intérêt d'être facile à travailler).

La figure 2 représente un autre mode de réalisation du bâti selon l'invention (les pièces de ce bâti qui correspondent identiquement aux pièces du bâti décrit plus haut sont repérées par les même chiffres). Ce second mode de réalisation diffère essentiellement du précédent en ce que le banc 21, destiné au support et au guidage unidirectionnel d'une platine mobile (non représentée), ne comporte pas deux rails de guidages latéraux, mais un rail de guidage 25 central. Dans ce bâti, les surfaces de guidage S1, S1' ne sont donc plus définies par les côtés situés en vis-à-vis de deux rails parallèles, mais par les côtés opposés d'un même rail 25 de section parfaitement rectangulaire. La poutre 2 de ce second type de bâti, laquelle est destinée au support et au guidage d'un chariot (non représenté), est maintenue à distance du banc 21 par deux entretoises 3 dont une extrémité est directement en contact du plateau 4 du banc 21.

L'assemblage des différentes pièces de ce bâti est relativement plus simple que celui des pièces du bâti précédent dans la mesure où il ne comporte pas de phase de réglage du parallélisme des surfaces S1, S1', lequel est réalisé antérieurement par usinage du rail 25. Il consiste en la fixation du rail 25 sur l'axe médian du plateau 4 au moyen de tiges filetées 8 et d'écrous, laquelle est suivie de l'assujettissement de l'ensemble poutre 2, entretoises 3 et plateau 4, au moyen de tiges filetées 11 et d'écrous, comme il a été décrit précédemment : après un préserrage des écrous sur les tiges filetées 11, on positionne très précisément la poutre 2 par rapport au rail 25, de façon que ses surfaces de guidage S2, S2' soient perpendiculaires aux surfaces S1, S1' et à la surface S3, puis on serre les écrous jusqu'à la position de blocage. Une fois cet assemblage réalisé, on verrouille les différentes pièces les unes par rapport aux autres au moyen d'inserts 12, comme il a été décrit à propos du bâti précédent.

Par rapport au bâti comportant deux rails de guidage latéraux, le bâti à un rail médian présente l'avantage de comporter une pièce de moins, d'être plus facile à assembler et à ajuster, et, même compte tenu de l'allongement des entroises 3 nécessité par l'élévation de la platine (non représentée) due à la position médiane du rail 21, de peser moins lourd. En contrepartie, les platines adaptées aux bancs à rail médian sont surélevées par rapport à celles qui sont prévues pour les bancs à rails latéraux, ce qui peut être gênant dans certains cas.

Bien que les bâtis décrits précédemment aient été présentés leur plateau 4 situé dans un plan horizontal, il va de soi que ces bâtis peuvent, selon les besoins, occuper toutes les positions dans l'espace. D'autre part, la présente invention n'est pas limitée aux exemples de réalisation qui viennent d'être décrits ; elle est au contraire susceptible de variantes et de modifications qui apparaîtront à l'homme de l'art.

**Revendications**

1. Procédé de fabrication d'un banc (1, 21) de support et de guidage pour un dispositif de positionnement d'un appareil parallèlement à un axe rectiligne X-X', caractérisé en ce qu'il comporte les étapes de :
- usiner dans un matériau minéral :
• un plateau (4) définissant une surface de référence plane (S3),
• au moins un rail de guidage (5, 25) pour définir deux surfaces de référence planes, parallèles (S1, S1') ;
- percer
• dans le(s) rail(s) de guidage (5, 25) au moins deux trous (6) parallèles aux surfaces (S1, S1') et,
• dans le plateau (4), des trous (6') perpendiculaires à la surfaces plane (S3) correspondant aux trous (6) percés dans le(s) rail(s) (5, 25) en vue de l'assujettissement dudit (desdits) rail(s) audit plateau ;
- positionner le(s) rail(s) de guidage (5, 25) relativement au plateau (4) de façon que :
• les surfaces (S1, S1') soient parallèles l'une à l'autre et soient parallèles à l'axe (X-X'),
• les surfaces (S1, S1') soient perpendiculaires à la surface (S3) ;
- assujettir le(s) rail(s) de guidage (5, 25) au plateau (4) au moyen de tiges filetées (8) et d'écrous, lesdites tiges filetées passant dans les trous (6, 6') ;
- verrouiller le banc (1, 21) au moyen d'inserts (12)
• logés dans la masse du matériau minéral constituant le plateau (4) et le(s) rail(s) de guidage (5, 25),
• mitoyens audit plateau et audit (auxdits) rail(s), et
• d'axe sensiblement perpendiculaire à celui des trous (6, 6').

2. Procédé de fabrication d'un bâti de support et de guidage pour un dispositif de positionnement d'un appareil dans un plan défini par des axes perpendiculaires (X-X', Y-Y'), ledit bâti comportant :
• un banc pour le support et le guidage d'une platine parallèlement à l'axe (X-X'), et
• une poutre pour le support et le guidage d'un chariot parallèlement à l'axe (Y-Y'),
ledit procédé étant caractérisé en ce qu'il comporte les étapes de :
- fabriquer dans un matériau minéral
• un banc (1, 21) définissant deux surfaces de référence planes (S1, S1') parallèles, ainsi qu'une surface plane de référence (S3) perpendiculaire aux surfaces (S1, S1') ;
- usiner
• une poutre (2) définissant deux surfaces de référence planes (S2, S2') parallèles, et
• deux entretoises (3) ayant des longueurs identiques ;
- percer
• à chacune des extrémités de la poutre (2), parallèlement aux surfaces de référence (S2, S2'), au moins deux trous (9),
• dans les entretoises (3), parallèlement à leur longueur, des trous (9'), et
• dans le banc (1, 21), perpendiculairement à la surface de référence (S3), des trous (9"), les trous (9', 9") correspondant aux trous (9) en vue de l'assujettissement de ladite poutre audit banc avec intercalation desdites entretoises ;
- positionner la poutre (2) relativement au banc (1, 21) avec intercalation des entretoises (3) pour maintenir ladite poutre à distance dudit banc de façon que:
• les surfaces de référence (S2, S2') de la poutre (2) soient perpendiculaires aux surfaces de référence (S1, S1') du banc (1, 21),
• les surfaces de référence (S2, S2') de la poutre (2) soient perpendiculaires à la surface de référence (S3) du banc (1, 21) ;
- assujettir la poutre (2) au banc (1, 21) avec intercalation des entretoises (3), au moyen de tiges filetées (11) et d'écrous, lesdites tiges filetées passant dans les trous (9, 9', 9") ;
- verrouiller le bâti au moyen d'inserts (12)
• logés dans la masse du matériau minéral constituant le banc (1, 21), la poutre (2) et les entretoises (3),
• mitoyens audit banc, à ladite poutre et auxdites entretoises, pris deux à deux,
• d'axe sensiblement perpendiculaire à celui des trous (9, 9', 9").

3. Procédé de fabrication d'un bâti de support et de guidage selon la revendication 2, caractérisé en ce que l'étape de fabriquer dans un matériau minéral un banc (1, 21) définissant
• deux surfaces de références planes (S1, S1'), parallèles, et
• une surface de référence plane (S3) perpendiculaire aux surfaces (S1, S1'),
est conforme au procédé revendiqué dans la revendication 1.

4. Banc (1, 21) de support et de guidage pour un dispositif de positionnement d'un appareil parallèlement à un axe rectiligne (X-X'), ledit banc étant fait d'un matériau minéral, caractérisé
- en ce qu'il comporte
• un plateau (4) définissant une surface de référence plane (S3),
• au moins un rail de guidage (5, 25) rapporté pour définir deux surfaces de références planes (S1, S1'), parallèles à l'axe (X-X') et perpendiculaires à la surface (S3) ;
- en ce que le(s) rail(s) (5, 25) de guidage sont assujettis au plateau (4) au moyen de tiges filetées (8) et d'écrous, et
- en ce que le plateau 4 et le(s) rail(s) (5, 25) sont verrouillés deux à deux les uns aux autres au moyen d'au moins un insert (12) mitoyen.

5. Banc (1) de support et de guidage selon la revendication 4, caractérisé en ce qu'il comporte deux rails de guidage (5) latéraux, les faces desdits rails situées en vis-à-vis définissant les surfaces de références (S1, S1').

6. Banc (21) de support et de guidage selon la revendication 4, caractérisé en ce qu'il comporte un rail de guidage (25), les faces latérales dudit rail définissant les surfaces (S1, S1').

7. Banc (1, 21) de support et de guidage selon une des revendications 4 à 6, caractérisé en ce que
•les inserts (12) sont de forme cylindrique, et
• l'axe desdits inserts est perpendiculaire à celui des trous (6, 6').

8. Banc (1,21) de support et de guidage selon une des revendications 4 à 7, caractérisé en ce que le matériau minéral dont est fait le banc est du granit rectifié et poli.

9. Banc (1, 21) de support et de guidage selon une des revendications 4 à 8, caractérisé en ce que les inserts (12) sont métalliques.

10. Bâti de support et de guidage pour un dispositif de positionnement d'un appareil dans un plan défini par des axes perpendiculaires (X-X'; Y-Y'), ledit bâti comportant :
- un banc pour le support et le guidage d'une platine parallèlement à l'axe (X-X') définissant deux surfaces de référence planes (S1, S1') parallèles, ainsi qu'une surface plane de référence (S3) perpendiculaire aux surfaces (S1, S1'), et
- une poutre (2) pour le support et le guidage d'un chariot parallèlement à l'axe (Y-Y'), définissant deux surfaces de références planes (S2, S2') parallèles, ledit banc et ladite poutre étant faits dans un matériau minéral et étant maintenus écartés l'un de l'autre par deux entretoises (3),
ledit bâti étant caractérisé en ce que les deux entretoises (3) sont également faites dans un matériau minéral.

11. Bâti de support et de guidage selon la revendication 10, caractérisé en ce que le banc est conforme au banc (1, 21) revendiqué dans la revendication 4.

12. Bâti de support et de guidage selon une des revendications 10 ou 11, caractérisé en ce que la poutre (2), les entretoises (3) ainsi que le banc (1, 21) sont assujettis les uns aux autres au moyen de tiges filetées (11) et d'écrous.

13. Bâti de support et de guidage selon une des revendications 11 ou 12, caractérisé en ce que la poutre (2), les entretoises (3) et le banc (1, 21) sont verrouillés deux à deux les uns aux autres au moyen d'au moins un insert (12) mitoyen.

14. Bâti de support et de guidage selon une des revendications 12 ou 13, caractérisé
- en ce que les inserts (12) sont de forme cylindrique, et
- en ce que leur axe est perpendiculaire à celui des tiges filetées (8, 11).

15. Bâti de support et de guidage selon une des revendications 10 à 14, caractérisé en ce que le matériau minéral dont est fait le bâti est du granit rectifié et poli.

16. Bâti de support ou de guidage selon une des revendications 13 à 15, caractérisé en ce que les inserts (12) sont métalliques.

0260180

Office européen
des brevets

# RAPPORT DE RECHERCHE EUROPEENNE

Numero de la demande

EP 87 40 1932

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | SCIENCE ET VIE, no. 813, juin 1985, page 115, Paris, FR; "Le retour à l'âge de pierre" | 1,2,4, 10 | B 23 Q 1/02 B 23 Q 1/26 |
| A | DE-A-2 044 110 (FORTUNA) | 1 | |
| A | CH-A- 634 243 (FISCHER) | 1 | |
| A | FR-A-2 308 824 (PETIT-JEAN) | 1 | |
| A | GB-A- 287 422 (HERBERT) | 1 | |
| A | DE-A-3 415 197 (MESSER) | 1 | |

DOMAINES TECHNIQUES
RECHERCHES (Int. Cl.4)

B 23 Q
B 24 B

Le présent rapport a été établi pour toutes les revendications

| Lieu de la recherche | Date d'achèvement de la recherche | Examinateur |
|---|---|---|
| LA HAYE | 25-11-1987 | DE GUSSEM J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

EPO FORM 1503 03.82 (P0402)